# DEMANDE DE BREVET EUROPEEN

(11) **EP 0 887 900 A1**
(43) Date de publication de la demande: **30.12.1998**
(21) Numéro de dépôt: 98401576.8
(22) Date de dépôt: 25.06.1998
(51) Int. Cl.: H01S 3/23

(54) **Dispositif laser à têtes multiples**

(30) Priorité: 27.06.1997 FR 9708137
(71) Demandeur: COMMISSARIAT A L'ENERGIE ATOMIQUE, 75015 Paris (FR)
(72) Inventeur: Chatroux, Daniel, 26200 Montélimar (FR); Maury, Jaques, 26130 Saint-Paul-Trois Chateaux (FR); Rieux, Olivier, 38100 Grenoble (FR)
(74) Mandataire: Poulin, Gérard

(57) **Abrégé**

L'invention concerne un dispositif laser à têtes multiples comportant :
- n têtes lasers (1, 2, 3, 4) identiques, fonctionnant à une fréquence f₀, avec n ≥ 2 ;
- une alimentation électrique impulsionnelle (5) fonctionnant à une fréquence nf₀ et destinée à exciter les têtes lasers par des impulsions électriques à une fréquence f₀ ;
- des moyens d'aiguillage (6), connectés entre l'alimentation électrique et les têtes lasers, pour sélectionner, à un instant donné, une des n têtes lasers à exciter.

## Description

### Domaine de l'invention

L'invention concerne un dispositif laser pulsé à gaz muni de plusieurs têtes lasers et d'une seule alimentation électrique impulsionnelle.

L'invention trouve des applications dans le domaine des lasers et, plus particulièrement, des lasers pulsés à gaz.

### Etat de la technique

Les dispositifs lasers pulsés à gaz sont des dispositifs alimentés par une source d'énergie électrique fournissant une tension continue et capables d'émettre des impulsions laser de forte puissance crète, de faible durée et avec une fréquence de répétition relativement élevée. Dans ce type de dispositifs lasers, le gaz utilisé comme tampon est très souvent le néon.

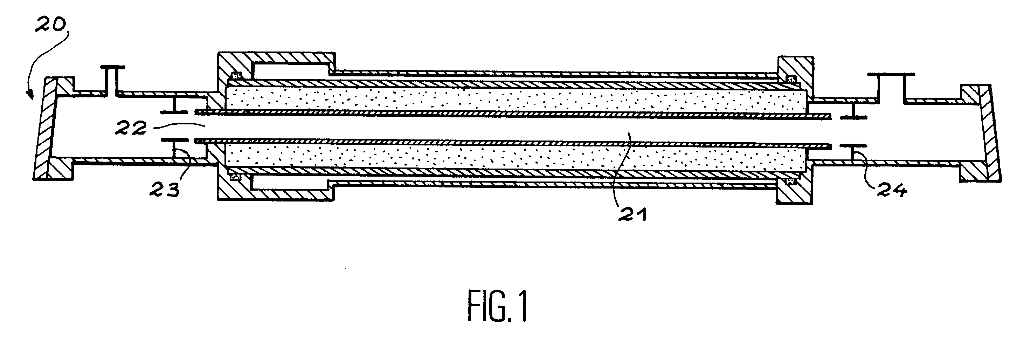

Ces dispositifs comportent une tête laser du type de celle représentée sur la figure 1.

Classiquement, la tête laser 20 contient un milieu laser 22 qui, dans l'exemple de la figure 1, est de la vapeur de cuivre. Dans un tel laser, du cuivre métallique 21 est placé dans la tête laser ; l'évaporation de ce cuivre permet de former le milieu laser, c'est-à-dire la vapeur de cuivre.

La tête laser 20 comporte deux électrodes 23 et 24 entre lesquelles est appliquée une tension élevée destinée à provoquer, dans le milieu laser 22, des décharges électriques qui produisent chacune une impulsion laser.

Des explications complémentaires concernant les lasers à vapeur de cuivre sont données dans le document intitulé « High-power copper vapor laser development » de Nabutada AOKI and al., SPIE vol. 1412; Gas and metal vapor lasers and applications, 1991.

Toutefois, d'autres types de milieux lasers sont classiquement utilisés, par exemple, de l'halogénure de cuivre, du CO₂, ou encore un milieu de type excimer.

Ces dispositifs lasers pulsés à gaz comportent chacun une alimentation électrique impulsionnelle qui permet d'appliquer, de façon brève et répétitive, une haute tension entre les électrodes 23 et 24 de la tête laser.

Des exemples d'alimentations électriques impulsionnelles sont décrits dans les documents suivants : « High voltage solid-state pulser for high repetition-rate gas laser », EPE'89, third European conference on power electronics and applications, October 1989 ; «A series thyristor switch driving a multistage ferrite pulse compressor for copper-vapour-laser application », J. J. NEL, D. J. MULDER, G. L. BREDENKAMP, IEEE conference record of 1990 nineteenth power modulator symposium ; « Comparative evaluation of pulsing circuit for kilohertz excimer laser systems », Piet H. SWART, Hubertus M. Von BERGMANN, IEEE pulsed power conference, 1989 ; « Magnetic compression laser driving circuit », Don G. BALL, Dan BIRX, Edward G. COOK, U. S. patent no. 5, 177, 754, January 5, 1993 ; « High average power magnetic modulator for copper lasers », SPEER, J. S. SULLIVAN and P. G. WOODS, Digest of techical papers, eigth IEEE pulsed power conference, June 1991.

La plupart de ces alimentations électriques impulsionnelles comportent au moins un moyen de stockage de l'énergie et un moyen de commutation principal qui assure le déclenchement du transfert d'énergie depuis le moyen de stockage d'énergie vers la tête laser. Ce moyen de commutation principal peut être une association de thyristors, ou bien une matrice de transistors à effet de champ à grille isolée par oxyde métallique (MOSFET), ou encore une association de transistors bipolaires à grille isolée (IGBT), etc.

Certaines alimentations électriques impulsionnelles comportent aussi un ou plusieurs transformateur(s) qui permet(tent) d'obtenir une tension élevée sur la tête laser tout en conservant des contraintes en tension relativement faibles sur le moyen de commutation.

Certaines alimentations comportent, de plus, un moyen de compression des impulsions qui permet d'obtenir, d'une part, à l'entrée de la tête laser, une impulsion électrique plus brève et de valeur de courant crête plus élevée et, d'autre part, à limiter les contraintes sur le moyen de commutation.

Certaines alimentations comportent, en outre, un moyen de commutation auxiliaire qui sert à contrôler l'énergie accumulée dans le moyen de stockage de l'énergie, soit en maîtrisant l'apport de la source d'énergie électrique, soit en maîtrisant l'énergie réfléchie par la tête laser.

On comprendra donc aisément que de telles alimentations ont un coût de revient élevé. Aussi, lorsqu'il est nécessaire, dans une application particulière, d'utiliser plusieurs têtes lasers, le coût de l'ensemble du système laser est d'autant plus élevé que chaque tête laser est alimentée par une alimentation électrique impulsionnelle indépendante.

### Exposé de l'invention

L'invention a justement pour but de remédier aux inconvénients décrits précédemment.

A cette fin, l'invention propose un dispositif laser à têtes multiples alimenté par une seule alimentation électrique impulsionnelle.

De façon plus précise, l'invention concerne un dispositif laser à têtes multiples caractérisé par le fait qu'il comporte :
- n têtes lasers identiques fonctionnant à une fréquence f₀, avec n ≥ 2 ;
- une alimentation électrique impulsionnelle fonctionnant à une fréquence nf₀ et destinée à exciter chaque tête laser par des impulsions électriques à une fréquence f₀ ;
- des moyens d'aiguillage, connectés entre l'alimentation électrique et les têtes lasers, pour sélectionner, à un instant donné, une des n têtes lasers à exciter.

Avantageusement, les moyens d'aiguillage comportent une pluralité d'interrupteurs magnétiques formés par des inductances saturables commandées.

Selon un mode de réalisation préféré de l'invention, les moyens d'aiguillage comportent autant d'interrupteurs qu'il y a de têtes lasers, chaque interrupteur étant associé à une tête laser.

Le dispositif de l'invention peut comporter aussi n moyens de compression connectés chacun entre une tête laser et les moyens d'aiguillage pour améliorer l'impulsion d'excitation de la tête laser.

Il peut comporter, par ailleurs, des moyens optiques pour regrouper plusieurs faisceaux de sortie issus des n têtes lasers et constituer ainsi au moins un faisceau de fréquence supérieure à la fréquence f₀ de chaque faisceau de sortie.

### Brève description des figures

La figure 1, déjà décrite, représente schématiquement une tête laser classique ;
la figure 2 représente schématiquement le dispositif de l'invention ;
la figure 3 représente un chronogramme des différentes tensions dans le dispositif ;
les figures 4, 5 et 6 représentent des exemples de moyens optiques utilisés dans certains modes de réalisation du dispositif de l'invention pour modifier les faisceaux laser.

### Description détaillée de modes de réalisations de l'invention

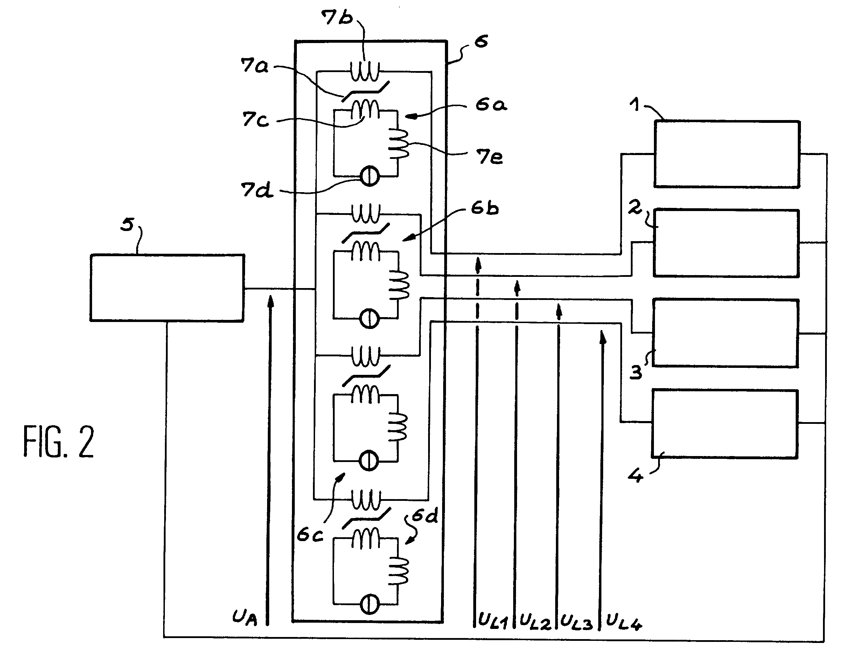

Sur la figure 2, on a représenté schématiquement le dispositif laser multitêtes de l'invention. Un tel dispositif a l'avantage de multiplier la puissance laser du dispositif.

Ce dispositif comporte plusieurs têtes lasers, référencées 1, 2, 3 et 4, alimentées par une seule alimentation électrique impulsionnelle 5. Les têtes lasers sont toutes identiques et fonctionnent toutes à la fréquence f₀.

Sur cette figure 2, on a représenté le dispositif dans le cas où celui-ci comporte quatre têtes lasers. Il est entendu qu'il peut comporter n têtes lasers, avec n ≥ 2. Quel que soit le nombre de têtes lasers du dispositif, celui-ci est alimenté par une seule alimentation électrique impulsionnelle 5. Cette alimentation électrique est classique et n'est, par conséquent, pas décrite de façon détaillée. On précise toutefois que son coût dépend de l'énergie d'impulsion qu'elle émet et non de sa fréquence de récurrence, ce qui signifie que son coût est quasiment identique qu'elle soit utilisée dans un dispositif laser multitêtes, ou dans un dispositif laser monotête.

Le dispositif de l'invention comporte, de plus, des moyens d'aiguillage 6 connectés sur la sortie de l'alimentation 5 et sur les entrées des têtes lasers 1 à 4, de façon à permettre l'aiguillage des impulsions électriques envoyées par l'alimentation 5 vers l'une ou l'autre des têtes lasers.

Les moyens d'aiguillage 6 comportent une pluralité d'interrupteurs magnétiques commandés 6a, 6b, 6c, 6d. De préférence, le nombre d'interrupteurs magnétiques des moyens d'aiguillage est le même que le nombre de têtes lasers du dispositif. La sortie de chacun des interrupteurs constituant les moyens d'aiguillage 6 est connectée sur l'entrée de l'une des têtes lasers 1 à 4. Ces interrupteurs magnétiques sont réalisés à partir d'une inductance saturable, munie d'un moyen permettant de maîtriser sa magnétisation, de manière à ce que, pour une impulsion brève, cette inductance saturable se comporte comme une inductance de très forte ou de très faible valeur, c'est-à-dire comme un interrupteur ouvert ou fermé.

De façon plus précise, chaque interrupteur magnétique comporte un noyau magnétique, par exemple, du ferrite Nickel-Zinc, qui possède un cycle d'hystérésis dont la valeur de saturation du champ magnétique est B_{SAT}.

Ce noyau magnétique est entouré d'un bobinage principal. Ainsi, l'interrupteur magnétique est considéré comme fermé lorsque le champ magnétique dans le noyau est approximativement égal à B_{SAT}, l'inductance présentée par le bobinage principal étant alors très faible. Au contraire, l'interrupteur magnétique est considéré comme ouvert si le champ magnétique est inférieur à B_{SAT}, l'inductance présentée par le bobinage principal étant alors très élevée. Dans ce cas, l'interrupteur magnétique peut supporter, à ses bornes, une tension importante durant un certain temps, c'est-à-dire le temps jusqu'à ce que le champ magnétique atteigne la valeur BSAT.

Un tel interrupteur magnétique est représenté sur la figure 2 et référencé 6a. Les autres interrupteurs du dispositif sont tous identiques à l'interrupteur 6a et portent les références 6b, 6c et 6d. Chacun de ces interrupteurs magnétiques comporte, outre le noyau magnétique 7a et le bobinage principal 7b, un bobinage (ou enroulement) auxiliaire 7c utilisé pour maîtriser le champ électrique et donc le courant susceptible de parcourir le bobinage principal. Cet interrupteur comporte, de plus, un circuit de commande 7d qui se comporte comme une source de courant et injecte du courant dans le bobinage auxiliaire. Il comprend, de plus, une inductance 7e, connectée en série avec ce circuit de commande 7d et dont le rôle est de permettre au circuit de commande de ne pas avoir à supporter une tension trop importante lorsque l'interrupteur magnétique est ouvert et soumis à une forte tension.

Selon un mode de réalisation de l'invention, le dispositif laser à têtes multiples comporte des moyens de compression des impulsions électriques dont le rôle est identique à celui des moyens de compression des dispositifs lasers classiques. Dans l'invention, un moyen de compression des impulsions est connecté en amont de chacune des têtes lasers, c'est-à-dire entre chaque sortie des moyens d'aiguillage 6 et chaque tête laser 1 à 4.

Du point de vue du fonctionnement du dispositif, il est à noter que chacune des têtes laser du dispositif fonctionne à une fréquence f₀. Les n têtes lasers du dispositif ont un fonctionnement décalé dans le temps de 1/nf₀.

Il est à noter, en outre, que dans le mode de réalisation où des moyens de compression des impulsions sont connectés en amont des têtes lasers, lesdits moyens de compression fonctionnent également à la fréquence f₀.

Par ailleurs, l'alimentation électrique impulsionnelle 5 fonctionne à une fréquence nf₀.

Sur la figure 2, on a représenté, par des flèches, les différentes tensions (U_{L1}, U_{L2}, U_{L3}, U_{L4}, U_{A}) obtenues dans le dispositif en fonctionnement.

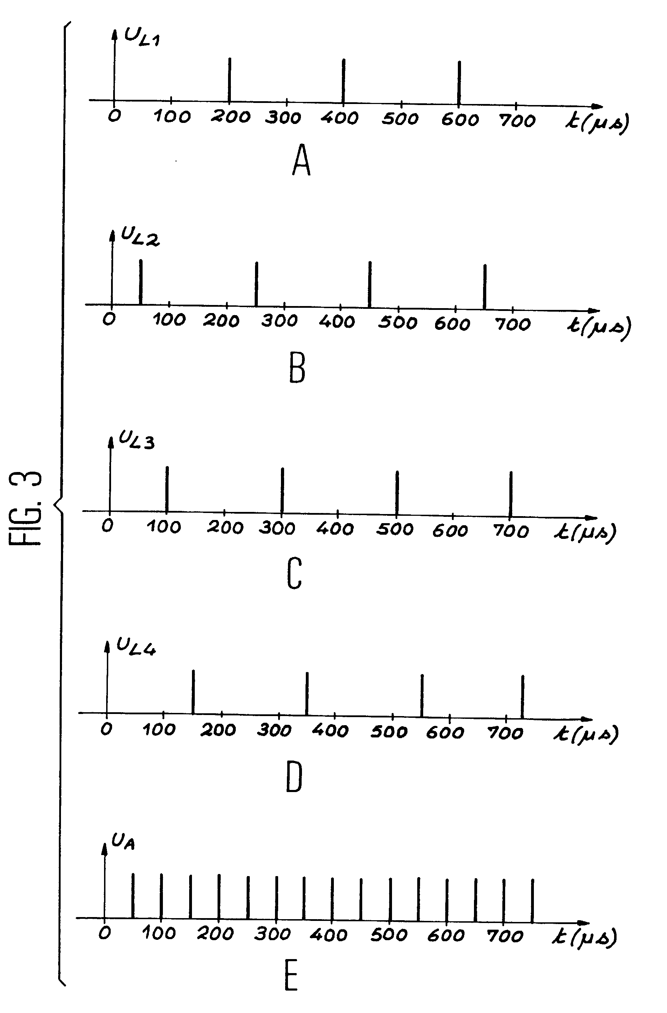

Sur la figure 3, on a représenté les chronogrammes de ces tensions.

Sur la voie A, on a représenté la tension U₁₁ de la tête de laser 1 dans le temps, c'est-à-dire les différentes impulsions reçues par la tête laser 1 pendant 700 µs.

Sur la voie B, on a représenté les différentes impulsions (U₁₂) reçues par la tête 2 ; sur la voie C, on a représenté les différentes impulsions (U₁₃) reçues par la tête laser 3 ; et sur la voie D, on a représenté les impulsions (U₁₄) reçues par la tête de laser 4.

Comme on le voit sur ces voies A, B, C et D, la fréquence des impulsions est la même quelle que soit la tête laser.

Sur la voie E, on a représenté la tension U_{A} du dispositif, ce qui correspond aux impulsions émises par l'alimentation électrique impulsionnelle 5 en direction des moyens d'aiguillage 6. L'alimentation 5 envoie une impulsion toutes les 50 µs, tandis que chaque tête laser reçoit une impulsion toutes les 200 ms. Ceci confirme que l'alimentation 5 émet à une fréquence n fois supérieure à la fréquence f₀ de chacune des têtes lasers.

Selon certains modes de réalisation de l'invention, le dispositif laser à têtes multiples comporte des moyens optiques situés en aval des têtes lasers et qui permettent de rassembler ou de modifier les différents faisceaux lasers issus des n têtes lasers.

Différents moyens optiques permettent ainsi d'obtenir un ou plusieurs faisceaux à la fréquence f₀ ou à des fréquences différentes de la fréquence f₀.

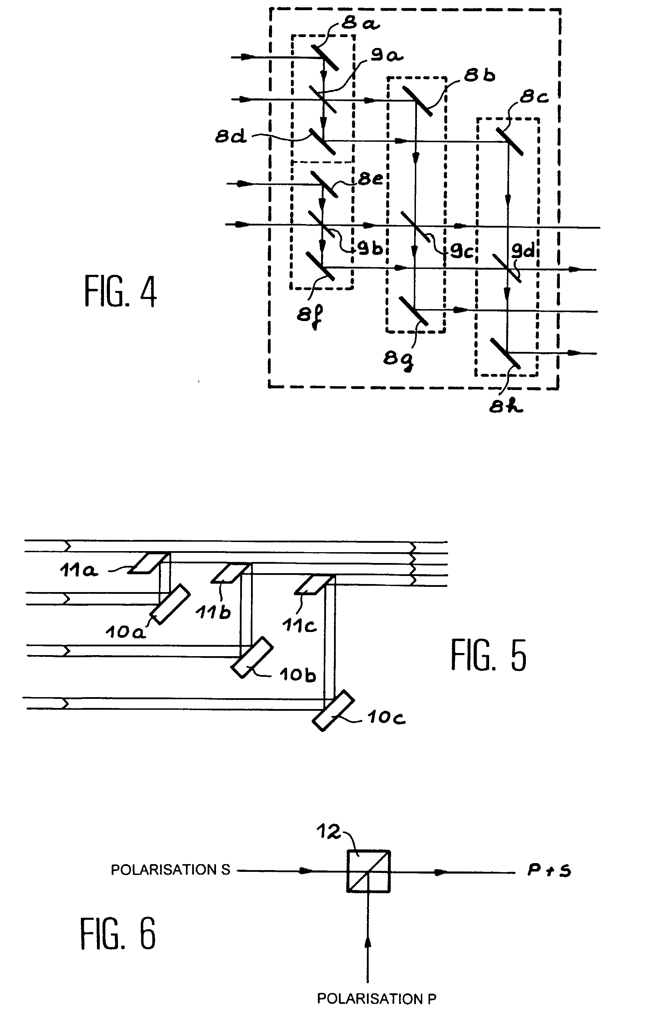

Sur la figure 4, on a représenté un exemple de moyen optique. Il s'agit d'un moyen mélangeur qui peut être placé en aval des quatre têtes lasers montrées sur la figure 2. Les quatre flèches montrées en entrée du moyen mélangeur représentent les quatre faisceaux lasers émis par les quatre têtes lasers 1, 2, 3 et 4 de la figure 2.

On a représenté sur cette figure 4, par des traits gras, des miroirs totalement réfléchissants (8a - 8h) et par des traits fins, des miroirs semi-réfléchissants (9a - 9d). Cet exemple de moyen mélangeur, qui comporte quatre miroirs semi-réfléchissants et huit miroirs totalement réfléchissants, permet d'obtenir, à sa sortie quatre faisceaux lasers de fréquence nf₀.

Sur la figure 5, on a représenté un autre exemple de moyen optique appelé, par la suite, « moyen rassembleur » ; celui-ci permet de rassembler, c'est-à-dire de juxtaposer quatre faisceaux lasers issus de quatre têtes lasers différentes. Sur cette figure 5, chaque faisceau laser est représenté par un double trait et une flèche.

Ce moyen rassembleur comporte trois miroirs réfléchissants, référencés 10a, 10b et 10c et trois lames couteaux, référencées 11a, 11b et 11c. Les lames couteaux utilisées dans ce moyen rassembleur, sont des miroirs dont les bords ont une forme adaptée à la juxtaposition d'un faisceau réfléchi à 45° avec un faisceau arrivant par l'arrière, comme indiqué sur la figure 5. Ce moyen rassembleur permet d'obtenir à sa sortie un seul faisceau laser de fréquence 4f₀. On comprendra, bien sûr, que quel que soit le nombre de têtes lasers du dispositif, il est possible de regrouper, à l'aide de moyens optiques différents, deux ou trois ou plusieurs faisceaux lasers.

Sur la figure 6, on a représenté un autre type de moyen optique. Celui-ci ne peut être utilisé que pour deux faisceaux lasers polarisés (polarisation S, polarisation P). Ce moyen optique permet alors de superposer les deux faisceaux à l'aide d'un cube polariseur 12. Ce cube polariseur comporte un miroir particulier qui a la propriété de réfléchir ou de transmettre les rayons incidents en fonction de leur polarisation.

## Revendications

1. Dispositif laser à têtes multiples, caractérisé en ce qu'il comporte :
- n têtes lasers (1, 2, 3, 4) identiques, fonctionnant à une fréquence f₀, avec n > 2 ;
- une alimentation électrique impulsionnelle (5) fonctionnant à une fréquence nf₀ et destinée à exciter les têtes lasers par des impulsions électriques à une fréquence nf₀ ;
- des moyens d'aiguillage (6), connectés entre l'alimentation électrique et les têtes lasers, pour sélectionner, à un instant donné, une des n têtes lasers à exciter.

2. Dispositif laser selon la revendication 1, caractérisé en ce que les moyens d'aiguillage (6) comportent une pluralité d'interrupteurs magnétiques formés par des inductances saturables commandées.

3. Dispositif laser selon la revendication 2, caractérisé en ce que les moyens d'aiguillage (6) comportent autant d'interrupteurs (6a - 6d) qu'il y a de têtes lasers, chaque interrupteur étant associé à une tête laser.

4. Dispositif laser selon l'une quelconque des revendications 1 à 3, caractérisé en ce qu'il comporte n moyens de compression connectés chacun entre une tête laser et les moyens d'aiguillage pour améliorer l'impulsion d'excitation de la tête laser.

5. Dispositif laser selon l'une quelconque des revendications 1 à 4, caractérisé en ce qu'il comporte des moyens optiques pour modifier ou regrouper un ou plusieurs faisceaux de sortie issus des n têtes lasers et constituer ainsi au moins un faisceau de fréquence supérieure ou égale à la fréquence f₀ de chaque faisceau de sortie.
